Europäisches Patentamt

European Patent Office

Office européen des brevets

(11) Publication number: **0 449 266 A2**

## EUROPEAN PATENT APPLICATION

(21) Application number: **91104901.3**

(22) Date of filing: **27.03.91**

(51) Int. Cl.⁵: **B66F 9/12**

(30) Priority: **29.03.90 ES 9000895**

(43) Date of publication of application:
**02.10.91 Bulletin 91/40**

(84) Designated Contracting States:
**BE DE ES FR GB IT NL**

(71) Applicant: **Aragall Puig, Miguel**
**Avda. Alfonso XIII, 604**
**E-08913 Badalona (Barcelona)(ES)**

Applicant: **Compan Llaneza, Amadeo**
**Avda. Alfonso XIII, 604**
**E-08913 Badalona (Barcelona)(ES)**

(72) Inventor: **Aragall Puig, Miguel**
**Avda. Alfonso XIII, 604**
**E-08913 Badalona (Barcelona)(ES)**
Inventor: **Compan Llaneza, Amadeo**
**Avda. Alfonso XIII, 604**
**E-08913 Badalona (Barcelona)(ES)**

(74) Representative: **Klunker . Schmitt-Nilson .**
**Hirsch**
**Winzererstrasse 106**
**W-8000 München 40(DE)**

(54) A system providing a safe transmission of force to the load cell in a fork lift truck.

(57) A system providing a safe transmission of force to the load cell in a fork lift truck.

Characterized by providing parallelograms of articulating knife edge bearings disposed in parallel for the connection of the side corresponding to the truck to that corresponding to the loading arms of the same, there being a transverse bridge, with three knife edge articulation points, one at each extremity of the bridge and the other central, the extremities receiving the load carried on the arms of the truck and transmitting the force corresponding to the central support point to the load cell associated with the side attached to the truck.

Rank Xerox (UK) Business Services

This invention patent describes a system for the transmission of force to the load cell in a fork lift truck offering advantages over the methods as currently known.

The incorporation of load cells in lifting mechanisms where it is required to know the weight of the load lifted has the essential advantage that the weight is made known immediately while the load is still being handled or transported and the weighing operation is by this means considerably simplified.

It is also possible to incorporate load cells in fork lift trucks so as to signal the weight of the load carried by the arms of the fork, similarly combining the weighing and the handling operations of the load.

The system functions by providing that each of the fork arms is so connected to the load transmission mechanism that the load is communicated to the load cell by means of an interconnection between the arm actuating on the cell and the various members coupled up to the fork arms of the fork lift truck.

Given that currently known cells are sensitive to transverse or lateral applications of force which may cause damage to the cell it follows that where such cells are fitted to apparatus where a tranverse load may occur there is the possibility of damage to the load cell and the weighing mechanism will be inoperative. It is also impossible, in the case of a fork lift truck to avoid causing side-on forces on the arms of the fork distinct from the vertical forces caused by lifting and carrying. The side-on forces can be the result frequently by the alignment of the fork when inserting the arms into the voids in a pallet or a skid carry-the product to be handled. Light lateral shocks can thus arise from this operation as well as under numerous other circumstances in which fork lift trucks ar utilized.

In view of the above problem this patent discloses the means to elliminate this danger of transverse loads on load cells.

This present invention patent provides a solution to the the problem in the form of the incorporation of a system of load cell activation through an assembly of knife pivots in parallelogram form which are mutually interconnected so as to produce a single force application to the load cell, in that only the forces on a vertical axis are transmitted to hte cell while through the action of the parallelogram layout the transverse forces are not transmitted, but cause a deformation of the parallelogram system.

To offer a better understanding of the patent drawings are attached which explain the novel safety system for the transmission of forces to a load cell in a fork lift truck in accordance with this patent.

Figure 1 is a plan a full section view of the safety system as described in this patent.

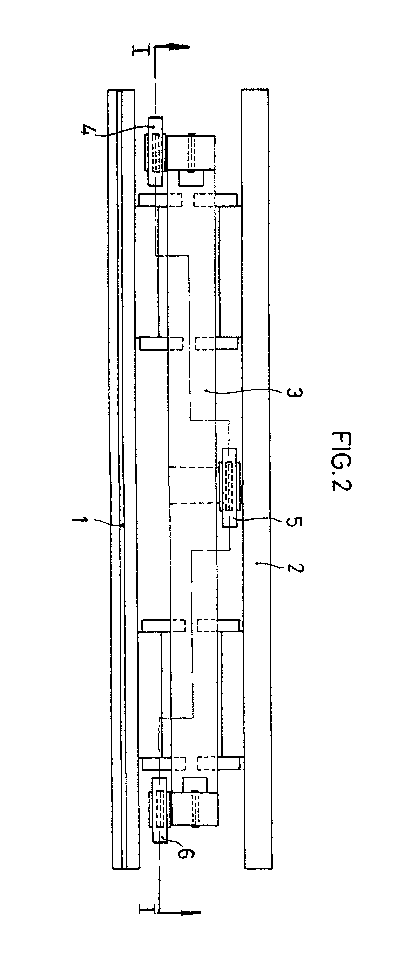

Figure 2 is a plan view corresponding to figure 1.

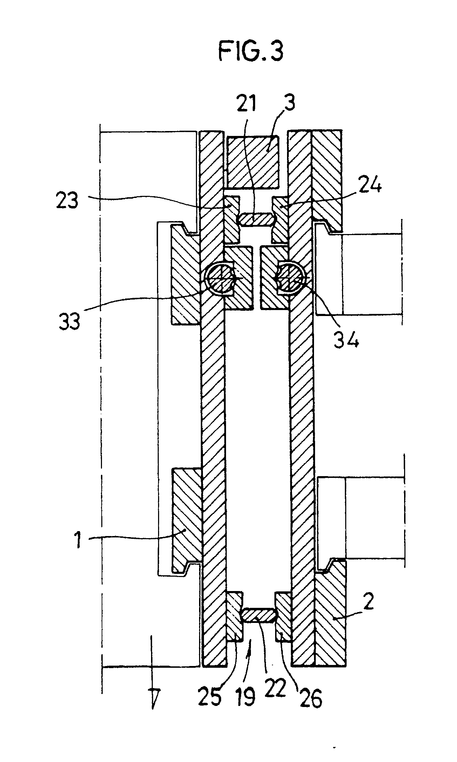

Figures 3 and 4 are respectively views on a cross section III-III and IV-IV in figure 1, corresponding to hte safety parallelogram layout.

Figures 5 and 6 are respectively details in section on the planes V-V and VI-VI.

Figures 7 and 8 are respectively sections on the planes VII -VII and VIII-VIII showing the bearings of the connecting cross member of the parallelograms.

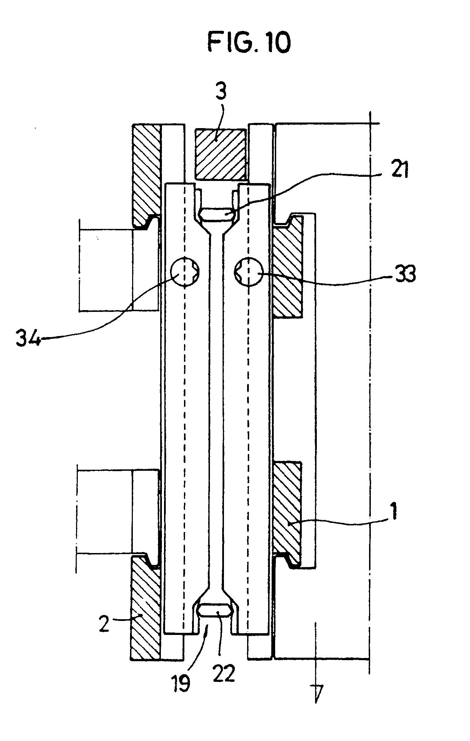

Figures 9 and 10 show respectively the cross sections on planes IX-IX and X-X of the other cross members and a lateral view of one of the parallelograms.

Figures 11 and 12 are respectively sections on planes XI-XI and XII-XII from figure 1.

Figure 13 is a plan view in partial section of an alternative arrangement of the safety and distribution system

Figures 14,15 and 16 are details corresponding to the adjustment and protection devices.

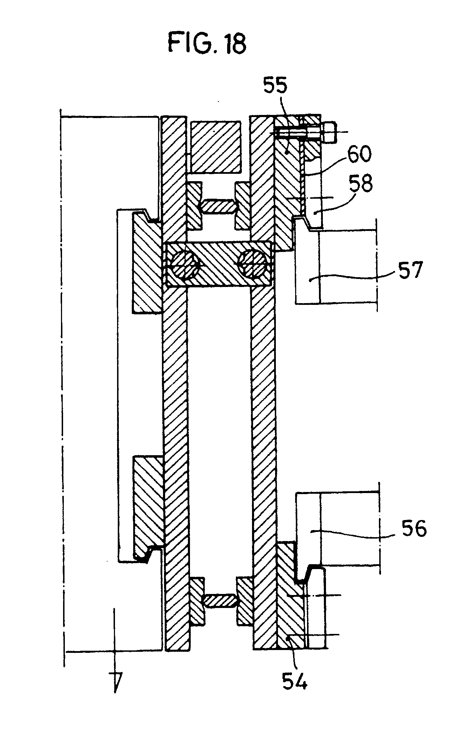

Figures 17 and 18 show in plan and in section an alternative arrangement of the fork connections of the truck.

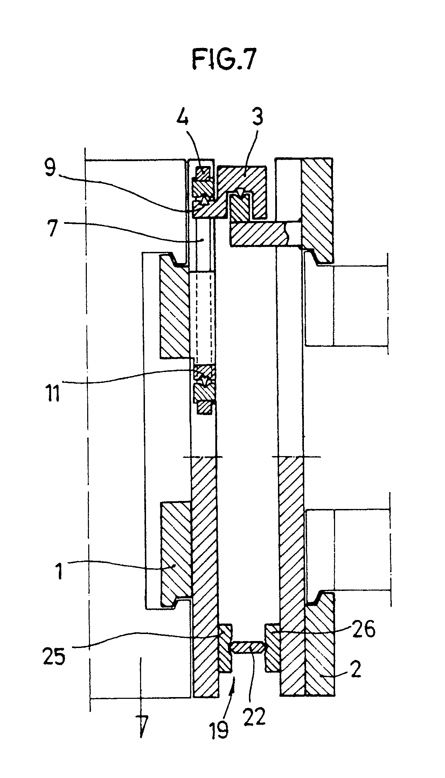

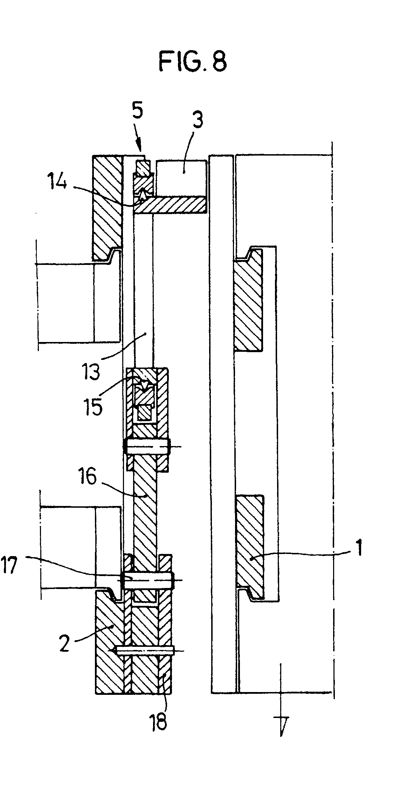

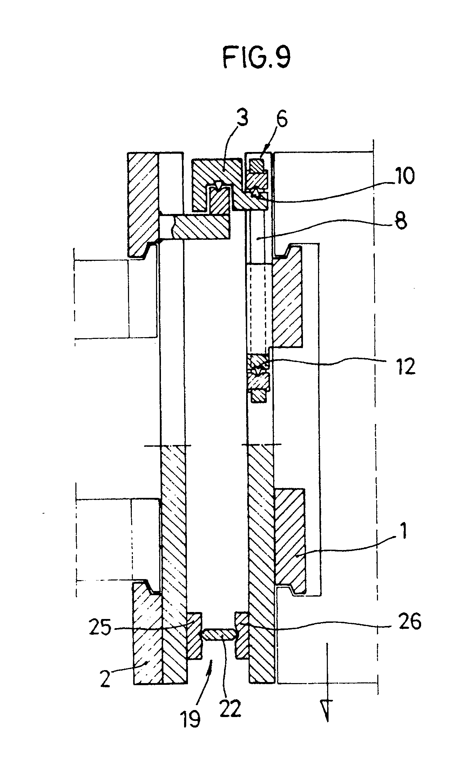

As can be seen in the drawings the connection between the load side -1-, connected to the arms of the fork of the truck and the side -2- of the support or that connected to the truck itself is provided by means of an intermediate bridge structure -3- having three principle points of support 4,5 and 6 which as can be seen in figures 7 and 9 are in the form of frames-7-and -8- connected by a cross member -3- through respectively knife and bearing pivots -9- and -10- in the upper part and -11- and -12- In the lower part, thus transmitting the load held on the forks of the truck to the intermediate support point -5-, in figure 8 in which the frame -13- is seen to be held to the cross member by the knife bearing -14- and at the lower end by the other knife bearing -15- and teansmits the load to on intermediate plate -16- which in turn is connected through a pin -17- to the load cell -18- which signals the load.

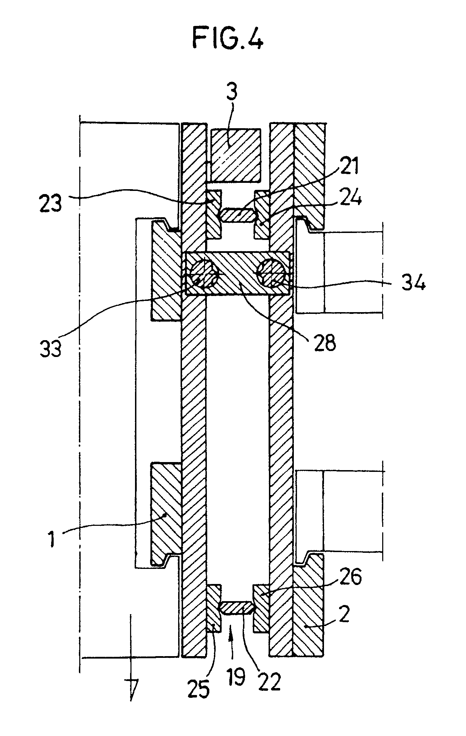

Two articulated parallelograms, with knife bearing joints disposed transversally, numbered -19- and -20- are comprised as in figure 4, of, twin knife bearings -21- and -22- respectively upper and lower, carried on their bearing blocks -23- and -24-, and, -25- and -26- on the side corresponding to the load or connection to the truck. Short transverse cross members 27,28 and 29 for the parallelogram -19- and 30,31 and 32 for the parallelogram -20- are fixed respectively to their corresponding transverse pins such as -33- and -34-shown in Figure 4, having other intermediate points of support in the form of knife edge bearings.

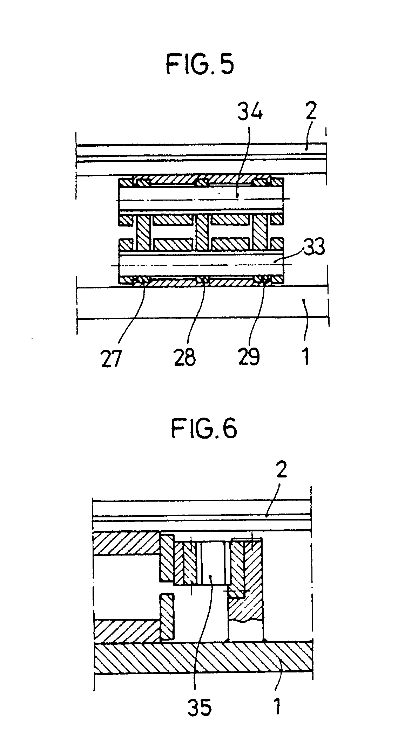

The articulated linkage, assuring protection against physical shock is completed by other knife edge bearings -35- and -36-, -35- being shown in Figure 6 on the lower side.

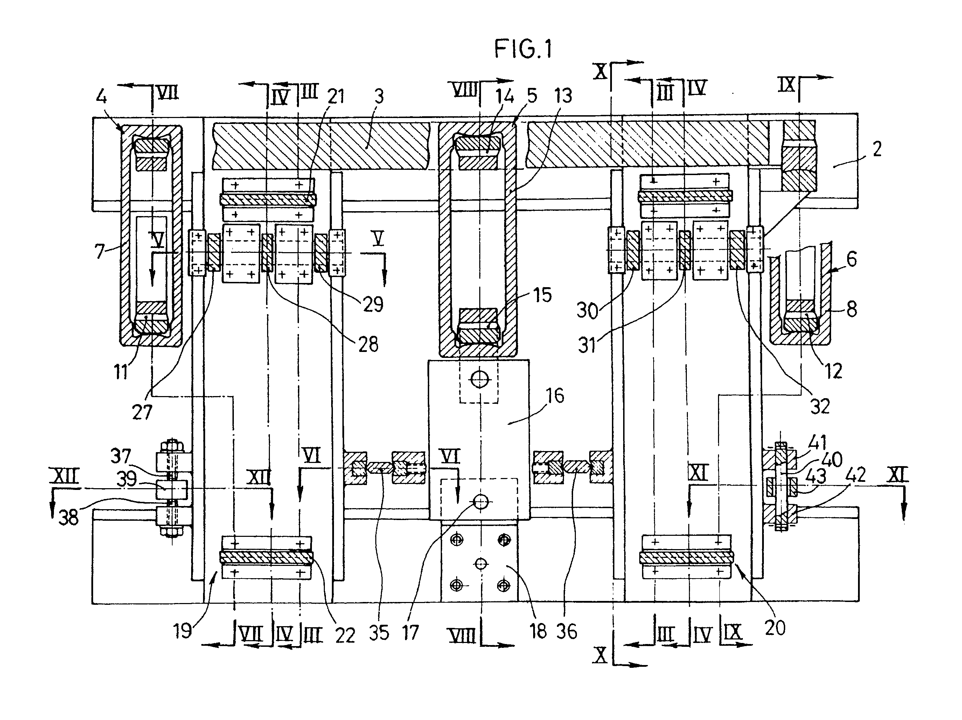

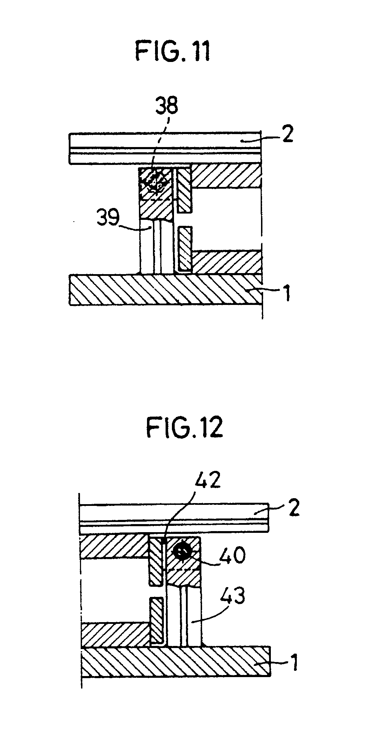

Figures 1 and 11 show adjustment screws with their locking nuts -37- and -38- for adjusting the position of the extension of the cross member -39-

In addition, as is shown in Figures 1 and 12 , a pin or dowel -40- is fitted between the projecting wings -41- and -42- passing through a hole in the expansion -43- with plenty of clearance and providing a safety means.

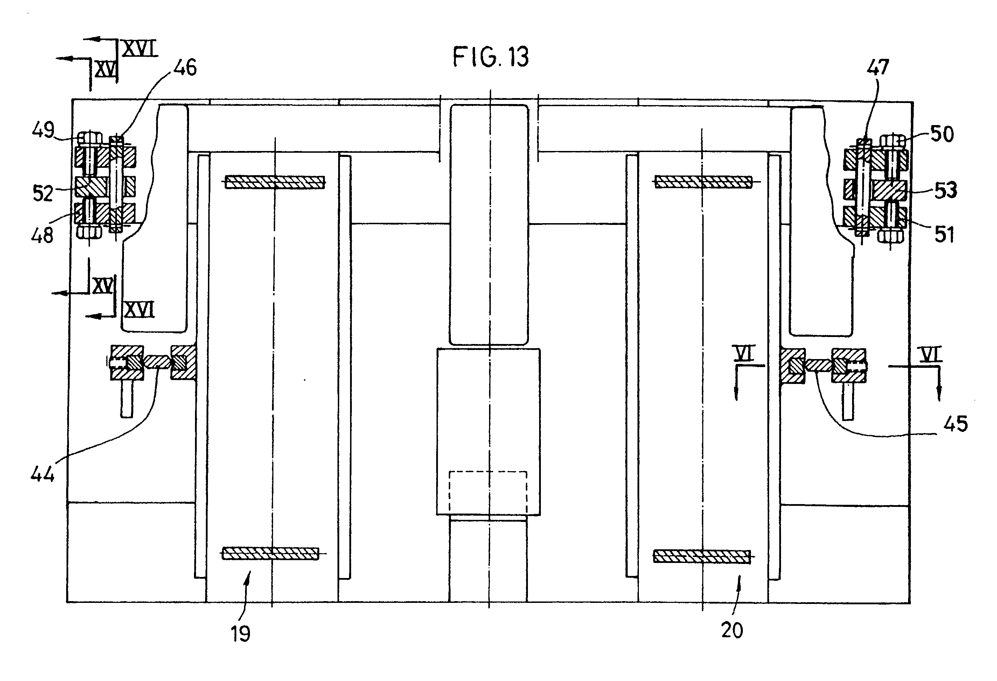

Figures 13,14,15 and 16 show a variation in which the knife edge bearings which provide protection against the effect of lateral shock, -44- and -45- are fitted laterally, that is to say on the outer side of the components -19- and -20-.

Also the devices for protection and adjustment can be provided, as seen in the drawings, by dowel pins -46- end -47- fitted with clearance assuring the prevention of breakage of the transverse pins -33- and -34-, simultaneously connecting up to the adjustment devices by means of the pairs of bolts -46-49-and -50-51- which operate on the items -52- and -53-.

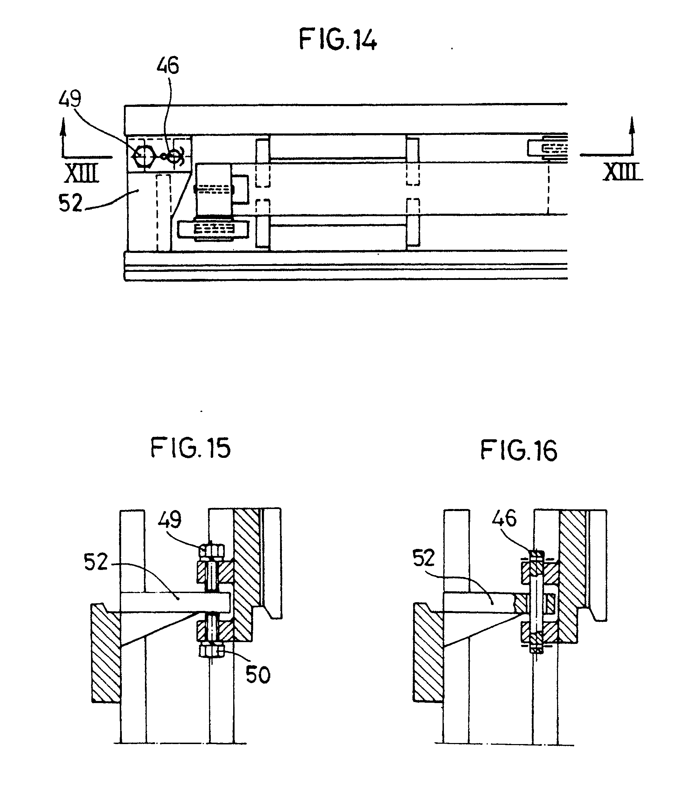

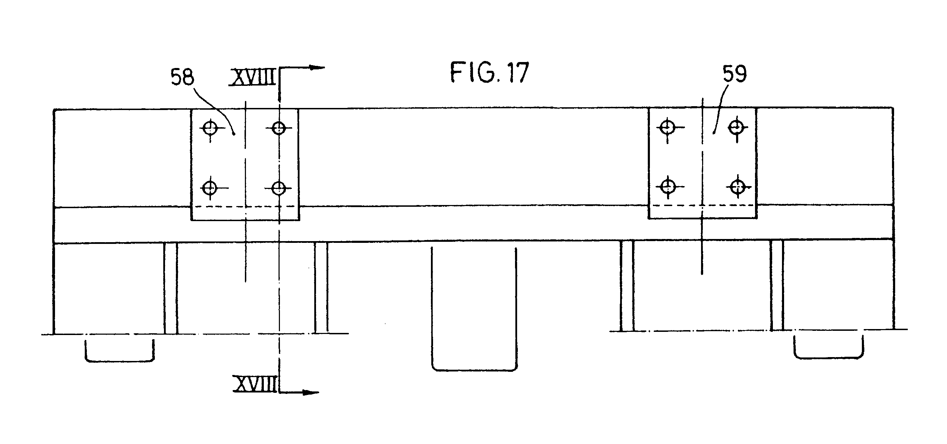

Also provided in the patent is a variant for the arms -2- holding to the truck. This variant takes the form shown in figure 17 and 16 in that the upper and lower places -54- and -55- respectively establish the slot width between the items -56- and -57- of the truck by means of plates -58- and -59- in figure 17 which are detachable, these being fitted by means of bolts with intermediate spacers -60- which permit the items -58- and -59- to have their spacing apart adjusted to compensate for any deformation of the structure of the truck in the course of its use.

Anything that does not alter, effect or modify the essence of the system of protection as described herein is to be regarded as a variable for purposes of this invention patent.

## Claims

1. A system providing a safe transmission of force to a load cell in a fork lift truck characterized by the provision of two parallelograms of articulating knife edge bearings disposed in parallel for the connection of the side corresponding to the truck to that corresponding to the loading arms of the same, there being a transverse bridge with three knife edge articulation points, one at each extremity of the bridge and the other central, the extremities receiving the load carried on the arms of the truck and transmitting the force corresponding to the central support point to the load cell associated with the side attached to the truck.

2. A system providing a safe transmission of force to a load cell in a fork lift truck as in claim 1, characterized in that each of the three support points of the cross-member forming the connection carries on interrelated vertical frame by means of a double knife edge bearing articulation on the upper and the lower side respectively, of the cross-member and on the load part corresponding to the arms of the truck and on the force measuring device or load cell incorporated in the side of the truck.

3. A system providing a safe transmission of force to a load cell in a fork lift truck, as in claim 1, characterized in that the two systems of articulated knife edge bearings, disposed in parallel each have in the upper part transverse shafts or dowels secured to pins carrying their respective additional knife edges.

4. A system providing a safe transmission of force to a load cell in a fork lift truck as in claim 1, characterized by an arrangement of sets of double knife edge bearings in a transverse disposition, perpendicular to the planes of attachment to the loading aide and the side of the truck.

5. A system providing a safe transmission of force to a load cell in a fork lift truck as in claim 1, characterized by a system of adjustment and intermediate screws adjustable in position corresponding to the lower part of one of the two knife edge bearing parallelograms.

6. A system providing a safe transmission of force to a load cell in a fork lift truck as in claim 1, characterized by the arrangement of the zone corresponding to the lower part of the other knife edge bearing parallelogram of a pin fixed in projecting wings and which passes through an intermediate extension with considerable clearance for purposes of safety.

7. A system providing a safe transmission of force to a load cell in a fork lift truck as in claims 5 and 6 characterized by an arrangement of systems which prevent breakage and allow for adjustment of position simultaneously in the upper part of the plane of attachment to the truck, comprising bolts to prevent the breakage fitted between the upper and lower fixed projections, traversing with clearance the intermediate plate on which acts the position adjustment bolts incorporated in the said projections.

FIG.1

EP 0 449 266 A2

FIG.2

## FIG.3

FIG.4

## FIG.5

## FIG.6

# FIG.7

## FIG. 8

# FIG.9

# FIG. 10

## FIG. 11

## FIG.12

FIG.13

## FIG.14

## FIG.15

## FIG.16

FIG.17

## FIG. 18